# EUROPÄISCHE PATENTSCHRIFT

(11) **EP 0 442 014 B1**
(45) Veröffentlichungstag und Bekanntmachung des Hinweises auf die Patenterteilung: **13.04.1994**
(21) Anmeldenummer: 90103024.7
(22) Anmeldetag: 16.02.1990
(51) Int. Cl.: B60R 22/36

(54) **Gurtaufroller für Fahrzeug-Sicherheitsgurtsysteme**
Belt retractor for vehicle seat-belt systems
Enrouleur de sangle pour ceintures de sécurité de véhicules

(43) Veröffentlichungstag der Anmeldung: 21.08.1991
(73) Patentinhaber: TRW REPA GMBH, 73553 Alfdorf (DE)
(72) Erfinder: Hönl, Wolf-Dieter, D-7079 Böbingen (DE); Weller, Hermann, D-7077 Alfdorf-Burgholz (DE)
(74) Vertreter: Degwert, Hartmut, Dipl.-Phys.

(56) Entgegenhaltungen:
- FR-A- 2 536 661
- US-A- 4 537 363
- US-A- 4 552 319
- US-A- 4 729 524

## Beschreibung

Die Erfindung betrifft einen Gurtaufroller für Fahrzeug-Sicherheitsgurtsysteme, mit einer in dem Gehäuse des Gurtaufrollers drehbar gelagerten Gurtspule zum Aufwickeln des Gurtbandes und einem fahrzeugsensitiven und/oder gurtbandsensitiven Sperrmechanismus, der eine an ihrem Außenumfang mit einer Steuerverzahnung versehene Steuerscheibe aufweist, durch deren Relativdrehnung zur Gurtspule der Sperrmechanismus aktivierbar ist, und einem federelastisch an dem Außenumfang des Gurtbandwickels in Anlage gehaltenen Taster, der Steuerflächen aufweist, mit denen wenigstens ein Betätigungsarm einer am Gehäuse schwenkbar gelagerten Steuerklinke zusammenwirkt, wobei die Steuerklinke zwischen einen ersten stabilen Stellung, in der sie mit ihrer Klinkenspitze in die Steuerverzahnung eingreift und einer zweiten stabilen Stellung, in der sie aus dem Bereich der Steuerverzahnung heraus verlagert ist, beweglich ist und der dem Außendurchmesser des Gurtbandwickels folgende Taster mit seinen Steuerflächen die Steuerklinke in ihre erste stabile Stellung bewegt, wenn der Außendurchmesser des Gurtbandwickels einen vorbestimmten Minimalwert erreicht hat, und in ihre zweite stabile Stellung bewegt, wenn dieser Außendurchmesser einen vorbestimmten Wert erreicht hat.

Ein gattungsgemäßer Gurtaufroller für Fahrzeug-Sicherheitsgurtsysteme ist aus der FR-A-25 36 661 bekannt. Bei diesem Gurtaufroller ist ein dem Außendurchmesser eines Gurtbandwickels folgender Tasthebel vorgesehen, der wahlweise eine Steuerklinke in Eingriff mit der Steuerverzahnung einer Steuerscheibe bewegt. Greift die Steuerflinke in die Steuerscheibe ein, wird die Gurtspule relativ zur Steuerscheibe bewegt und daraufhin die Gurtspule gesperrt. Der Steuerscheibe ist auch ein fahrzeugsensitiver Sensor zugeordnet, dessen Klinke bei Aktivierung durch den Sensor ebenfalls in die Steuerverzahnung eingreift und eine Relativbewegung zwischen Gurtspule und Steuerscheibe und somit eine Sperrung der Gurtspule auslöst. Eine Feder ist an die Steuerklinke angeschlossen und beaufschlagt sie außer Eingriff mit der Steuerscheibe. In Abhängigkeit von der auf der Gurtspule aufgerollten Gurtbandmenge läßt sich der Gurtaufroller zwischen einer normalen Aufrollerfunktion und einer Blockierfunktion umsteuern, in welcher das Gurtband zwar aufgerollt werden kann, der weitere Gurtbandabzug jedoch gesperrt wird. Bei diesem bekannten Gurtaufroller wird also zur Auslösung der Blockierfunktion die bereits vorhandene Steuerscheibe verwendet, die zur Auslösung der fahrzeugsensitiven Sperrung vorgesehen ist und in deren Steuerverzahnung eine durch einen Trägheitssensor bewegbare Auslöseklinke fahrzeugsensitiv eingreift. Mit derselben Steuerverzahnung wirkt die vorgesehene, zusätzliche Steuerklinke zusammen, um bei Bedarf die Steuerscheibe anzuhalten und durch eine dann erfolgte Relativdrehung zwischen Gurtspule und Steuerscheibe einen Sperrmechanismus zur Gurtspulenblockierung auszulösen. Dieser Gurtaufroller kann als quasi-statisches System bezeichnet werden. Mit diesem ist es möglich, Gegenstände, wie Lasten oder Kindersitze so zu sichern, daß sie unverrückbar am Fahrzeugsitz gehalten werden.

In der US-A-4,537,363 ist ein Gurtaufroller offenbart, der einen auf einem Gurtband aufliegenden Taster aufweist, der im wesentlichen durch einen zu dem Gurtbandwickel hin und von diesem fort translatorisch verschiebbar geführten Tastkörper gebildet ist.

Aus der US-A-4,529,524 ist ein Gurtaufroller bekannt, der einen Taster für den Außendurchmesser eines Gurtbandwickels hat. Der Taster ist als zweiarmiger Hebel ausgebildet und mittels eines Langlochs auf einem gehäusefesten Stift zwischen zwei stabilen Stellungen verschwenkbar und verschiebbar gelagert.

Der Erfindung liegt die Aufgabe zugrunde, einen Gurtaufroller der eingangs angegebenen Art zu schaffen, der eine einfache und schnelle Umsteuerung zwischen der normalen Aufrollfunktion und einer quasi-statischen Blockierfunktion ermöglicht, wobei die grundsätzliche Konstruktion des Gurtaufrollers unverändert bleiben kann und die fahrzeugsensitive und/oder gurtbandsensitive Sperrfunktion nicht beeinträchtigt werden.

Diese Aufgabe wird bei einem Gurtaufroller der eingangs angegebenen Art erfindungsgemäß dadurch gelöst, daß die Steuerklinke zwischen ihrer ersten und ihrer zweiten stabilen Stellung unter Überwindung einer Übertotpunktlage beweglich ist und einen zweiarmigen Hebel bildet, an dessen einen Arm die Klinkenspitze gebildet ist und an dessen anderer Arm an einer der Steuerflächen des Tasters geführt ist.

Vorteilhafte Weiterbildungen der Erfindung sind in den Unteransprüchen angegeben.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: schematisch in Seitenansicht einen Gurtaufroller nach einer ersten Ausführungsform;
- Fig. 2: eine analoge Seitenansicht einer anderen Ausführungsform;
- Fig. 3 und 4: zwei Varianten der Ausführungsform nach Fig. 2; und
- Fig. 5 und 6: zwei weitere Ausführungsformen des Gurtaufrollers.

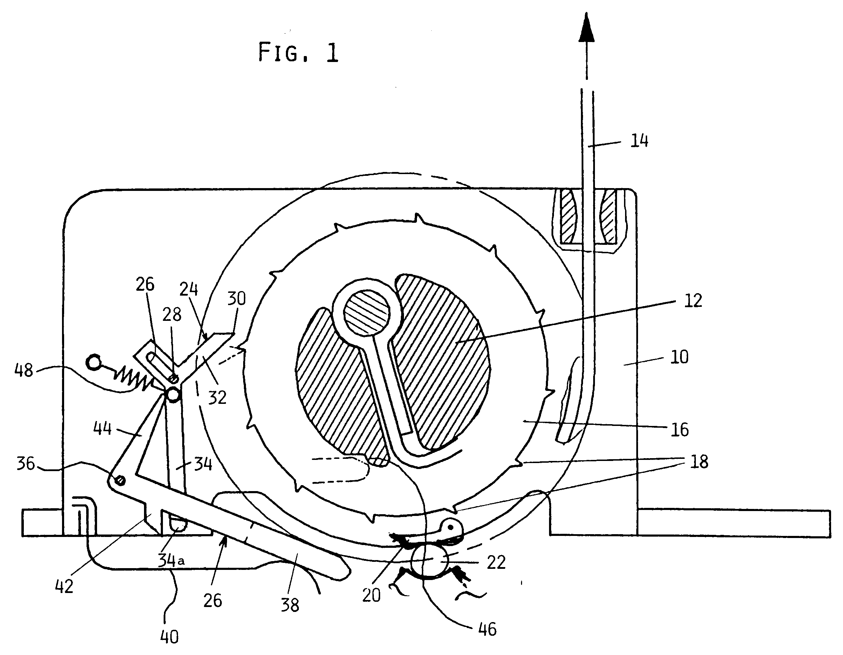

Zwischen den Seitenplatten eines Gehäuses 10 des Gurtaufrollers ist eine Gurtspule 12 drehbar gelagert. Auf dieser Gurtspule 12 ist das Gurtband 14 aufgewickelt. Zu der Gurtspule 12 relativ begrenzt verdrehbar ist eine Steuerscheibe 16, die an ihrem Außenumfang mit Steuerzähnen 18 versehen ist. Die Steuerscheibe 16 dient zur Aktivierung eines herkömmlichen und daher nicht gezeigten Sperrmechanismus. Die fahrzeugsensitive Aktivierung dieses Sperrmechanismus erfolgt, indem eine in Fig. 1 schematisch angedeutete Auslöseklinke 20, die auf einem Trägheitssensor in Form einer Massekugel 22 aufliegt, durch Bewegung dieses Trägheitssensors angehoben und in die Bewegungsbahn der Steuerzähne 18 verlagert wird. Die Steuerscheibe wird dann durch die Auslöseklinke 20 an ihrer Drehung gehindert, so daß bei weiterem Gurtbandabzug eine Relativdrehung zwischen Steuerscheibe 16 und Gurtspule 12 auftritt. Diese Relativdrehung wird in eine Stellbewegung umgesetzt, durch die ein Blockierriegel zur Blockierung der Gurtspule 12 aktiviert wird. Wenn die Steuerscheibe 16 mit einer geeigneten Massenträgheit ausgestattet ist, kann sie auch eine gurtbandsensitive Sperrung bewirken, indem sie durch Massenträgheit hinter der Drehung der Gurtspule 12 zurückbleibt.

Das vorhandene Ansteuersystem für den fahrzeugsensitiven und/oder gurtbandsensitiven Sperrmechanismus wird bei dem erfindungsgemäßen Gurtaufroller zusätzlich verwendet, um ihm eine quasi-statische Blockierfunktion zu verleihen. In dieser quasi-statischen Blockierfunktion soll Gurtband nur aufgerollt, aber nicht abgezogen werden können, um so Gegenstände auf einem Fahrzeugsitz sichern zu können, die unverrückbar festgelegt sein sollen, beispielsweise Lasten oder Kindersitze. Für diese zusätzliche Funktion werden bei der in Fig. 1 gezeigten Ausführungsform lediglich zwei Elemente benötigt: eine zusätzliche Steuerklinke 24 und ein Taster 26. Die zusätzliche Steuerklinke 24 bildet einen zweiarmigen Hebel, der mittels eines Langloches 27 auf einem gehäusefesten Stift 28 sowohl verschwenkbar als auch begrenzt translationsverschiebbar gelagert ist. Die Klinkenspitze 30 ist an dem einen Hebelarm 32 gebildet, während der zweite Hebelarm 34 einen Betätigungsarm bildet, der mit dem Taster 26 zusammenwirkt. Dieser Taster 26 ist seinerseits als zweiarmiger Hebel ausgebildet und auf einem gehäusefesten Stift 36 verschwenkbar gelagert. Der erste Hebelarm 38 wird durch eine Blattfeder 40 elastisch an den Außenumfang des Gurtbandwickels angedrückt, der in der Zeichnung durch den Buchstaben "B" angedeutet ist. Der Betätigungsarm 34 der Steuerklinke 24 greift mit einem seitlichen Ansatz 34a hinter den Hebelarm 38 des Tasters 26 und liegt an einer seiner Steuerflächen an, die durch die Außenseite dieses Hebelarms 38 gebildet ist. Eine weitere Steuerfläche ist an einem seitlichen Ansatz 42 des Hebelarms 38 gebildet. Eine weitere Steuerfläche des Tasters 26 ist am Ende seines zweiten Hebelarmes 44 gebildet.

Der in Fig. 1 im Schnitt gezeigte Wickelkörper der Gurtspule 12 ist an seinem Außenumfang mit einer Ausnehmung 46 versehen, in die bei abgewickeltem Gurtband das freie Ende des Hebelarms 38 des Tasters 26 teilweise eintauchen kann.

Die Steuerklinke 24 ist durch eine Zugfeder 48, die an ihrem einen Ende am Gehäuse 10 eingehängt ist und mit ihrem anderen Ende in der Nähe des Stiftes 28 am Hebelarm 34 der Steuerklinke 24 angreift, in solcher Weise federbeaufschlagt, daß die Klinkenspitze 30 bestrebt ist, sich in Richtung zum Außenumfang der Steuerscheibe 16 zu verlagern. Dennoch befindet sich die Steuerklinke 24 in einer stabilen Stellung außer Eingriff mit den Steuerzähnen 18 der Steuerscheibe 16, solange der Taster 26, wie in Fig. 1 mit durchgezogenen Linien gezeigt, an einem Gurtbandwickel B anliegt, der einen vorbestimmten minimalen Außendurchmesser aufweist oder überschreitet. Bei der gezeigten Ausführungsform wird dieser minimale Außendurchmesser erst dann überschritten, wenn das Gurtband 14 vollständig von der Gurtspule 12 abgewickelt ist. Der Hebelarm 38 befindet sich dann in der in Fig. 1 gestrichelt angedeuteten Stellung. In dieser Stellung ist das freie Ende des Ansatzes 42 des Hebelarms 38 weit genug angehoben, damit der Ansatz 34a am freien Ende des Hebelarmes 34 sich im Uhrzeigersinn über diesen Ansatz 42 hinaus bewegen kann. Zugleich hat auch das freie Ende des Hebelarms 44 den Hebelarm 34 der Steuerklinke 24 freigegeben. Unter der Wirkung der Zugfeder 48 wird die Steuerklinke 24 nun im Uhrzeigersinn verschwenkt, bis ihre Klinkenspitze 30 in die Bewegungsbahn der Steuerzähne 18 am Außenumfang der Steuerscheibe 16 gelangt. Wenn nun eine Relativbewegung zwischen Steuerscheibe 16 und Gurtspule 12 auftritt, wird die Sperrfunktion aktiv. Es kann also kein Gurtband 14 mehr abgezogen werden. Hingegen kann das Gurtband 14 aufgerollt werden, da die Klinkenspitze 30 und die Steuerzähne 18 in ihrer Form so aufeinander abgestimmt sind, daß eine Sperrwirkung nur in Gurtband-Abzugsrichtung stattfindet.

Zur Einstellung der quasi-statischen Blockierfunktion wird also zunächst das Gurtband 14 vollständig von der Gurtspule 12 abgezogen. Erst wenn das freie Ende des Hebelarmes 38 in die Ausnehmung 46 eintaucht, wird die Steuerklinke 24 zur Einsteuerung in die Steuerzähne 18 am Außenumfang der Steuerscheibe 16 freigegeben. Das Gurtband 14 wird nun um den zu sichernden Gegenstand herumgelegt, die Steckzunge wird in ein Gurtschloß eingesteckt, und das Gurtband 14 wird freigegeben, so daß es sich auf der Gurtspule 12 aufrollt. Die Steuerklinke 24 befindet wird während dieses Vorganges in einer stabilen Eingriffsstellung, so daß die quasi-statische Blockierfunktion erhalten bleibt. Um nun den Gurtaufroller wieder mit der fahrzeugsensitiven und/oder gurtbandsensitiven Sperrfunktion zu betreiben, wird das Gurtband 14 nahezu vollständig aufgewickelt, bis der Außendurchmesser des Gurtwickels B einen vorbestimmten Zwischenwert erreicht hat. Beim Vorgang des Aufwickelns wird der Hebelarm 38 des Tasters 26 im Uhrzeigersinn verschwenkt. Damit der Ansatz 34a am Ende des Hebelarmes 34 der Steuerklinke 24 wieder hinter den Ansatz 42 am Hebelarm 38 zurückspringen kann, muß eine Verlagerung der Steuerklinke 24 stattfinden, bei welcher das Langloch 27 als Führung dient. Nach Ausführung der hierfür erforderlichen kombinierten Translations- und Schwenkbewegung befinden sich Taster 26 und Steuerklinke 24 wieder in der in Fig. 1 gezeigten Stellung; in diesem Zustand wird die Steuerklinke 24 durch das an ihr anliegende freie Ende des Hebelarmes 44 sowie durch Anlage ihres Ansatzes 34a am Hebelarm 38 in einer stabilen Lage außer Eingriff mit den Steuerzähnen 18 der Steuerscheibe 16 gehalten.

Bei allen im folgenden beschriebenen, weiteren Ausführungsformen ist nur die Ausgestaltung der Steuerklinke 24 und des Tasters 26 unterschiedlich gegenüber Fig. 1, so daß sich eine erneute Beschreibung der übereinstimmenden Merkmale erübrigt.

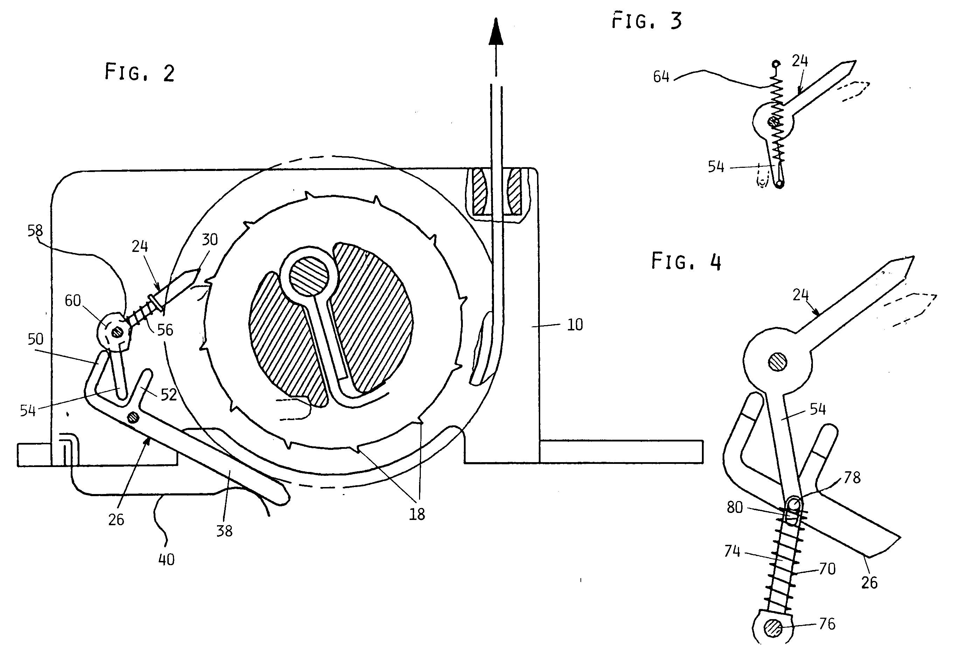

Bei der Ausführungsform nach Fig. 2 bildet der Taster 26 einen zweiarmigen Hebel, dessen Hebelarm 38 durch die Blattfeder 40 elastisch an den Außemumfang des Gurtbandwickels B angelegt wird, während der andere Hebelarm mit einer gabelförmigen Struktur aus zwei im Abstand voneinander angeordneten Fingern 50, 52 versehen ist. In den Raum zwischen diesen beiden Fingern 50, 52 greift ein Betätigungsarm 54 der als zweiarmiger Hebel ausgebildeten Steuerklinke 24. Auf dem Hebelarm der Steuerklinke 24, der an seinem freien Ende die Klinkenspitze 30 aufweist, ist eine Druckfeder 56 abgestützt, die sich mit ihrem anderen Ende auf einer Steuerfläche 58 einer gehäusefesten Gestaltung 60 abstützt. Diese Steuerfläche 58 ist so ausgebildet, daß die Steuerklinke 24 unter Überwindung einer Übertotpunktlage zwischen zwei stabilen Stellungen beweglich ist. In der ersten, in Fig. 2 mit durchgezogenen Linien gezeigten Stellung befindet sich die Klinkenspitze 30 außer Eingriff mit den Steuerzähnen 18. In der zweiten stabilen Stellung greift die Klinkenspitze 30 in die Bewegungsbahn der Steuerzähne 18 ein. Zwischen diesen beiden Stellungen wird die Steuerklinke 24 über die gabelförmige Struktur umgesteuert, die durch die beiden Finger 50, 52 des Tasters 26 gebildet ist und mit dem Betätigungsarm 54 der Steuerklinke 24 zusammenwirkt.

Die Handhabung des Gurtaufrollers ist bei dieser Ausführungsform die gleiche wie bei der nach Fig. 1 und wird daher nicht erneut beschrieben.

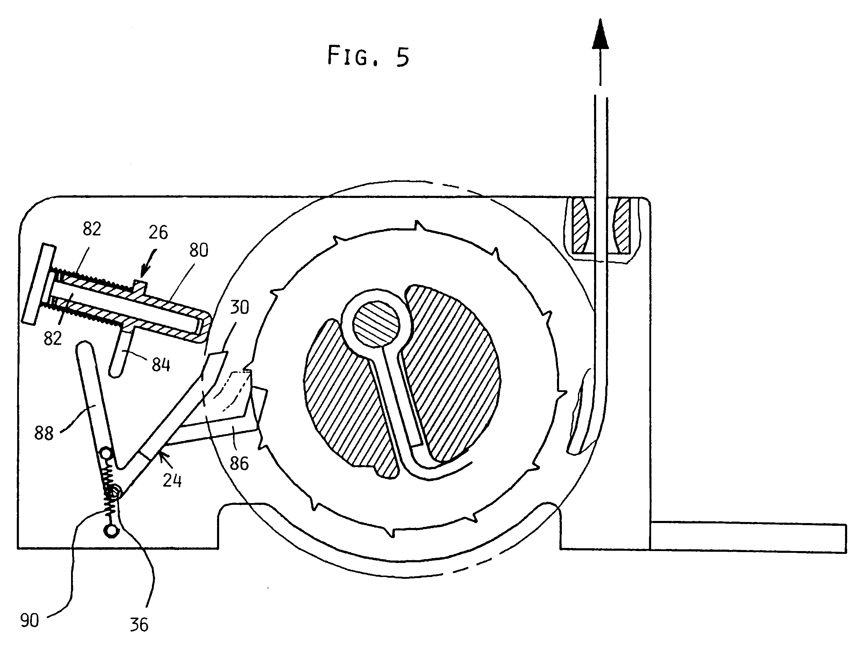

Bei der Ausführungsvariante nach Fig. 3 ist die Steuerklinke 24 grundsätzlich von gleicher Gestalt wie in Fig. 2, steht jedoch unter der Wirkung einer Zugfeder 64, die bestrebt ist, sie in eine ihrer zwei stabilen Lagen zu bewegen, unter Überwindung einer mittleren Totpunktlage, die durch die Wirkungsrichtung der Feder 64 in Beziehung zur Lage der Schwenkachse der Steuerklinke 24 definiert ist. Wie aus Fig. 3 ersichtlich, greift die Feder 64 einerseits am freien Ende des Betätigungsarmes 54 und andererseits am Gehäuse 10 des Gurtaufrollers an.

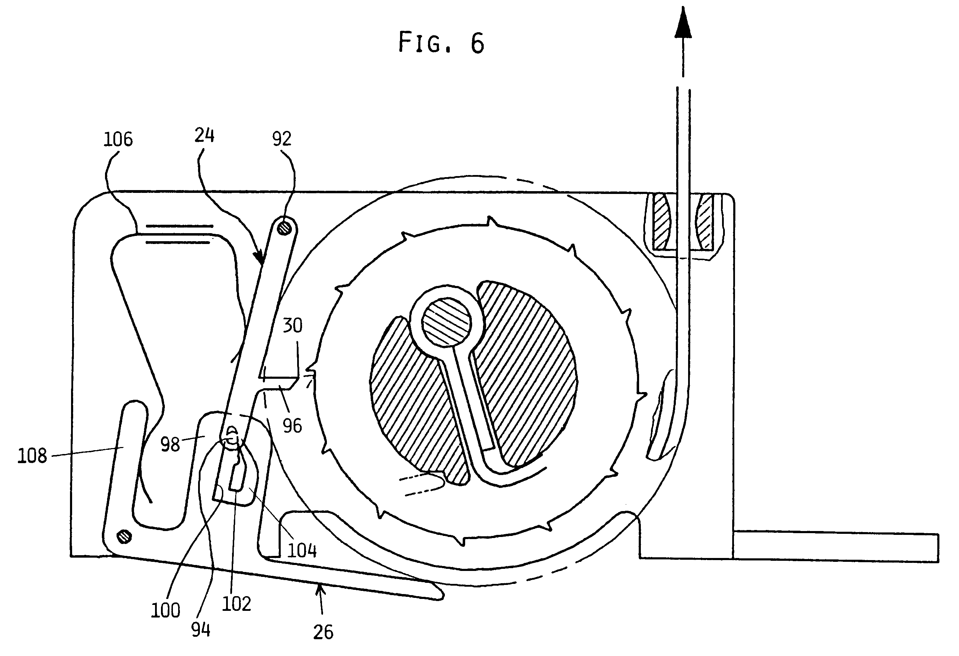

Bei der Ausführungsvariante nach Fig. 4 werden die beiden stabilen Lagen der Steuerklinke 24 durch Verwendung einer Druckfeder 70 in Kombination mit einem Hilfshebel 74 erreicht, der um einen gehäusefesten Stift 76 verschwenkbar ist und an dem sich die Druckfeder 70 mit ihrem einen Ende abstützt. Das andere Ende der Druckfeder 70 stützt sich auf einem Koppelstift 78 am Ende des Betätigungsarmes 54 der Steuerklinke 24 ab. Dieser Koppelstift 78 greift in ein Langloch 80 am freien Ende des Hilfshebels 74, so daß der Hilfshebel 74 und der Betätigungsarm 54 nach Art eines Kniehebelgelenkes mit Spiel miteinander zusammenwirken. Die Umsteuerung der Steuerklinke 24 zwischen ihren beiden stabilen Lagen unter Überwindung einer Totpunktlage erfolgt wiederum durch eine gabelförmige Struktur an dem einen Hebelarm des Tasters 26.

Bei der Ausführungsform nach Fig. 5 ist der Taster 26 durch einen translationsverschiebbaren Taststift 80 gebildet, der auf einer gehäusefesten Führungsstruktur 82 translationsverschiebbar in Richtung auf den Gurtwickel B zu und von diesem fort geführt ist. Durch eine Druckfeder 82 wird das freie Ende des Taststiftes 80 an dem Außenumfang des Gurtwickels B in Anlage gehalten. Der Taststift 80 ist mit einem seitlich abstehenden Betätigungsarm 84 versehen. Die Steuerklinke 24 ist als zweiarmiger Hebel ausgebildet, deren mit der Klinkenspitze 30 versehener Hebelarm zusätzlich einen ersten Betätigungsarm 86 trägt. Der andere Hebelarm bildet einen zweiten Betätigungsarm 88. Beide Betätigungsarme 86, 88 wirken mit dem Betätigungsarm 34 des Taststiftes 80 zusammen. Die um ihren Lagerstift 36 zwischen zwei stabilen Lagen verschwenkbare Steuerklinke 24 wird durch eine Zugfeder 90, die prinzipiell wie bei der Ausführungsvariante nach Fig. 3 angeordnet ist und wirkt, jeweils zu einer ihrer beiden stabilen Lagen hin beaufschlagt, wobei zur Bewegung zwischen den beiden Lagen eine Totpunktstellung überwunden werden muß.

Die Handhabung ist bei dieser Ausführungsform die gleiche wie bei den Gurtaufrollern nach den Fig. 1 und 2.

Bei der Ausführungsform nach Fig. 6 ist die Steuerklinke 24 als einarmiger Hebel ausgebildet, der an seinem einen Ende auf einem gehäusefesten Lagerstift 92 schwenkbar gelagert ist und an seinem freien Ende einen Führungsstift 94 trägt. Die Klinkenspitze 30 ist am Ende eines seitlichen Ansatzes 96 der Steuerklinke 24 gebildet. Der Führungsstift 94 wirkt mit einer Führungskulisse des Tasters 26 zusammen. Diese Führungskulisse ist in einem seitlichen Ausleger 98 des Tasters 26 gebildet. Der Ausleger 98 weist eine Aussparung 100 auf, deren Begrenzungsfläche mit einem federnden, elastisch nachgiebigen Teil 102 einen Führungskanal 104 bildet. Der Führungsstift 94 gleitet in dieser Führungsbahn 104, deren Gestalt so gewählt ist, daß der Taster 26 die Steuerklinke 24 in der gewünschten Weise und abhängig vom Außendurchmesser des Gurtwickels B zwischen ihren beiden stabilen Stellungen hin- und herbewegt. Eine am Gehäuse 10 eingespannte Blattfeder 106 drückt mit ihrem einen Ende die Steuerklinke 24 in Richtung ihrer Eingriffsstellung und mit ihrem anderen Ende gegen einen Arm 108 des Tasters 26, um diesen elastisch an den Außenumfang des Gurtbandwickels B anzulegen. Die Handhabung ist bei dieser Ausführungsform die gleiche wie bei den zuvor beschriebenen Gurtaufrollern.

## Patentansprüche

1. Gurtaufroller für Fahrzeug-Sicherheitsgurtsysteme, mit einer in dem Gehäuse (10) des Gurtaufrollers drehbar gelagerten Gurtspule (12) zum Aufwickeln des Gurtbandes und einem fahrzeugsensitiven und/oder gurtbandsensitiven Sperrmechanismus, der eine an ihrem Außenumfang mit einer Steuerverzahnung (18) versehene Steuerscheibe (16) aufweist, durch deren Relativdrehung zur Gurtspule (12) der Sperrmechanismus aktivierbar ist, und einen federelastisch an dem Außenumfang des Gurtbandwickels (B) in Anlage gehaltenen Taster (26), der Steuerflächen aufweist, mit denen wenigstens ein Betätigungsarm (34; 54) einer am Gehäuse schwenkbar gelagerten Steuerklinke (24) zusammenwirkt, wobei die Steuerklinke (24) zwischen einer ersten stabilen Stellung, in der sie mit einer Klinkenspitze (30) in die Steuerverzahnung (18) eingreift, und einer zweiten stabilen Stellung, in der sie aus dem Bereich der Steuerverzahnung (18) herausverlagert ist, beweglich ist und der dem Außendurchmesser des Gurtbandwickels (b) folgende Taster (26) mit seinen Steuerflächen die Steuerklinke (24) in ihre erste stabile Stellung bewegt, wenn der Außendurchmesser des Gurtbandwickels (B) einen vorbestimmten Minimalwert erreicht hat, und in ihre zweite stabile Stellung bewegt, wenn dieser Außendurchmesser einen vorbestimmten Wert erreicht hat, **dadurch gekennzeichnet**, daß die Steuerklinke (24) zwischen ihrer ersten und ihrer zweiten stabilen Stellung unter Überwindung einer Übertotpunktlage beweglich ist und einen zweiarmigen Hebel bildet, an dessen einem Arm die Klinkenspitze (30) gebildet ist und dessen anderer Arm an einer der Steuerflächen des Tasters (26) geführt ist.

2. Gurtaufroller nach Anspruch 1, **dadurch gekennzeichnet**, daß die Übertotpunktlage der Steuerklinke (24) durch eine gehäusefeste Steuerkurvenfläche (58) und ein sich darauf unter Federvorspannung abstützendes, an dem zweiarmigen Hebel gelagertes Teil (56) definiert ist.

3. Gurtaufroller nach Anspruch 1, **dadurch gekennzeichnet**, daß die Übertotpunktlage der Steuerklinke (24) durch eine Druckfeder (70), die sich mit ihrem einen Ende an einem um eine gehäusefeste Achse (76) schwenkbar gelagerten Hilfshebel (74) abstützt, und mit ihrem anderen Ende an dem von der Klinkenspitze (30) abgewandten Hebelarm (54) der Steuerklinke (24) abstützt, definiert ist, wobei dieser Hilfshebel mit dem Hebelarm (54) nach Art nach eines Kniehebelgelenks mit Spiel verbunden ist.

4. Gurtaufroller nach Anspruch 1 oder 2, **dadurch gekennzeichnet**, daß die Gurtspule (12) am Außenumfang ihres Wickelkörpers eine Ausnehmung (46) aufweist, in die der Taster (26) mit seiner Tastfläche eintaucht, wenn der Außendurchmesser des Gurtbandwickels (B) den vorbestimmten Minimalwert erreicht hat, der durch die vollständige Abwicklung des Gurtbands (14) von dem Wickelkörper definiert ist.

5. Gurtaufroller nach einem der vorstehenden Ansprüche, **dadurch gekennzeichnet**, daß der Taster (26) durch einen translationsverschiebbar zu dem Gurtbandwickel hin und von diesem fort beweglich geführten Tastkörper (80) gebildet ist.

6. Gurtaufroller nach einem der vorstehenden Ansprüche, **dadurch gekennzeichnet**, daß wenigstens eine der Steuerflächen des Tasters (26) an einem Ansatz (42) desselben gebildet ist.

7. Gurtaufroller nach einem der vorstehenden Ansprüche, **dadurch gekennzeichnet**, daß die Steuerflächen des Tasters (26) eine Steuerkulisse (104) bilden.

8. Gurtaufroller nach einem der vorstehenden Ansprüche, **dadurch gekennzeichnet**, daß die Steuerflächen des Tasters (26) an einer gabelförmigen Struktur (50, 52) desselben gebildet sind.

## Claims

1. Belt retractor for vehicle safety belt systems having a belt spool (12) rotatably mounted in the housing (10) of the belt retractor for taking up the webbing and a vehicle-sensitive and/or webbing-sensitive blocking mechanism which comprises a control disc (16) which is provided at its outer periphery with a control toothing (18) and by the rotation of which relatively to the belt spool (12) the blocking mechanism can be activated, and a feeler (26) held spring-resiliently on the outer periphery of the webbing coil (B) and comprising control faces with which at least one actuating arm (34; 54) of a control pawl (24) pivotally mounted on the housing (10) cooperates, the control pawl (24) being movable between a first stable position in which it engages with its pawl tip (30) into the control toothing (18) and a second stable position in which it is moved out of the region of the control toothing (18), and the feeler (26) following the outer diameter of the webbing coil (B) with its control faces moving the control pawl (24) into its first stable position when the outer diameter of the webbing coil (B) has reached a predetermined minimum value and into its second stable position when said outer diameter has reached a predetermined value, characterized in that the control pawl (24) is movable between its first and its second stable positions with overcoming of an over-deadcentre position and is formed by a two-armed lever on the one arm of which the pawl tip (30) is formed and the other arm of which is guided at one of the control faces of the feeler (26).

2. Belt retractor according to claim 1, characterized in that the over-deadcentre position of the control pawl (24) is defined by a housing-fixed control cam face (58) and a member (56) bearing thereon under spring bias and mounted on the two-armed lever.

3. Belt retractor according to claim 1, characterized in that the over-deadcentre position of the control pawl (24) is defined by a pressure spring (70) which bears with its one end on an auxiliary lever (74) pivotally mounted on a housing-fixed pin (76) and with its other end on the lever arm (54) of the control pawl (24) remote from the pawl tip (30), said auxiliary lever being connected with lost motion to the lever arm (54) in the manner of a toggle lever joint.

4. Belt retractor according to claim 1 or 2, characterized in that the belt spool (12) comprises at the outer periphery of its coil body a recess (46) into which the feeler (26) dips with its sensing face when the outer diameter of the webbing coil (B) has reached the predetermined minimum value defined by the webbing having been almost completely unwound from the coil body.

5. Belt retractor according to any one of the preceding claims, characterized in that the feeler (26) is formed by a feeler body (80) guided movably for translational displacement towards the webbing coil and away from the latter.

6. Belt retractor according to any one of the preceding claims, characterized in that at least one of the control faces of the feeler (26) is formed on a lug (42) thereof.

7. Belt retractor according to any one of the preceding claims, characterized in that the control faces of the feeler (26) form a control slide (104).

8. Belt retractor according to any of the preceding claims, characterized in that the control faces of the feeler (26) are formed on a fork-like structure (50, 52) thereof.

## Revendications

1. Enrouleur de ceinture pour systèmes de ceinture de sécurité de véhicules, comprenant une bobine (12) d'enroulement de la sangle montée rotative dans le boîtier (10) de l'enrouleur et un mécanisme de blocage répondant au véhicule et/ou à la sangle et comportant un disque de commande (16) qui présente une denture de commande (18) à la circonférence extérieure et dont la rotation relative par rapport à la bobine (12) actionne le mécanisme de blocage, et un palpeur (26) maintenu élastiquement en appui contre la circonférence extérieure de l'enroulement de la sangle (B) qui présente des surfaces de commande avec lesquelles coopère au moins un bras de manoeuvre (34 ; 54) d'un cliquet de commande (24) monté pivotant sur le boîtier (10), le cliquet de commande (24) étant mobile entre une première position stable dans laquelle il pénètre avec une pointe de cliquet (30) dans la denture de commande (18) et une seconde position stable dans laquelle il est déporté vers l'extérieur de la zone de la denture de commande (18) et le palpeur (26) qui suit le diamètre extérieur de l'enroulement de la sangle (B) déplaçant au moyen de ses surfaces de commande le cliquet de commande (24) pour le mettre à sa première position stable lorsque le diamètre extérieur de l'enroulement de la sangle (B) a atteint une valeur minimale prédéterminée et le déplaçant pour le mettre à sa seconde position stable lorsque ce diamètre extérieur a atteint une valeur prédéterminée, caractérisé en ce que le cliquet de commande (24) est mobile entre sa première et sa seconde position stable en franchissant une position de passage par un point mort et forme un levier double sur l'un des bras duquel la pointe (30) du cliquet est formée et dont l'autre bras est guidé sur l'une des surfaces de commande du palpeur (26).

2. Enrouleur de ceinture selon la revendication 1, caractérisé en ce que la position de passage du cliquet de commande (24) par un point mort est définie par une surface (58) d'une came de commande solidaire du boîtier et par un élément (56) prenant appui sous précontrainte élastique contre cette surface et monté sur le levier double.

3. Enrouleur de ceinture selon la revendication 1, caractérisé en ce que la position de passage du cliquet de commande (24) par un point mort est définie par un ressort de compression (70) dont une extrémité prend appui contre un levier auxiliaire (74) monté pivotant autour d'un axe (76) solidaire du boîtier et dont l'autre extrémité prend appui contre le bras de levier (54) du cliquet de commande (24) qui est à l'opposé de la pointe (30) du cliquet, ce levier auxiliaire étant relié avec jeu au bras de levier (54) à la manière d'une articulation à genouillère.

4. Enrouleur de ceinture selon la revendication 1 ou 2, caractérisé en ce que la bobine (12) comporte à la circonférence extérieure de son corps un évidement (46) dans lequel plonge la surface de sondage du palpeur (26) lorsque le diamètre extérieur de l'enroulement de la sangle (B) a atteint la valeur minimale prédéterminée qui est définie par le déroulement complet de la sangle (14) du corps de la bobine.

5. Enrouleur de ceinture selon l'une des revendications précédentes, caractérisé en ce que le palpeur (26) est formé d'un corps de sondage (80) guidé mobile en translation de manière qu'il se rapproche et s'éloigne de l'enroulement de la sangle.

6. Enrouleur de ceinture selon l'une des revendications précédentes, caractérisé en ce qu'au moins l'une des surfaces de commande du palpeur (26) est réalisée sur un prolongement (42) de ce dernier.

7. Enrouleur de ceinture selon l'une des revendications précédentes, caractérisé en ce que les surfaces de commande du palpeur (26) forment une glissière de commande (104).

8. Enrouleur de ceinture selon l'une des revendications précédentes, caractérisé en ce que les surfaces de commande du palpeur (26) sont formées sur une structure en fourche (50, 52) de ce dernier.
